# EUROPÄISCHE PATENTANMELDUNG

(11) **EP 1 516 716 A2**
(43) Veröffentlichungstag der Anmeldung: **23.03.2005**
(21) Anmeldenummer: 04020237.6
(22) Anmeldetag: 26.08.2004
(51) Int. Cl.: B30B 1/26, B30B 11/00

(54) **Presse für die Herstellung von Formlingen aus pulverförmiger Masse**

(30) Priorität: 16.09.2003 DE 10342645
(71) Anmelder: Komage-Gellner Maschinenfabrik KG, 54427 Kell am See (DE)
(72) Erfinder: Markeli, Wilfried, 54411 Hermeskeil (DE)
(74) Vertreter: Bernhardt, Winfrid, Dr.-Ing.

(57) **Zusammenfassung**

In einer Presse für die Herstellung von Formlingen aus pulverförmiger Masse mit einer Oberstempelhalterung, die an einem durch Hubstangen gehaltenen Querteil angeordnet ist, und einem den Oberstempel über die Hubstangen und das Querteil bewegenden Exzenter-Kurbeltrieb weist das Querteil einen die elastische Dehnung der Presse beim Presshub mindestens teilweise ausgleichenden hydraulischen Stelltrieb (23) für den Oberstempel auf.

Der Stelltrieb (23) ist ausgehend von der jeweiligen tatsächlichen Dehnung der Presse gesteuert von einem in der Achse der Oberstempelhalterung angeordneten Kraftmesser (26) in Verbindung mit der in einer Steuereinheit (51) gespeicherten Kraft-Dehnungs-Funktion mindestens der Hubstangen, vorzugsweise der Presse im Ganzen.

## Beschreibung

Die Erfindung bezieht sich auf eine Presse für die Herstellung von Formlingen aus pulverförmiger Masse,
mit einer Oberstempelhalterung, die an einem durch Hubstangen gehaltenen Querteil angeordnet ist,
insbesondere mit einem den Oberstempel über die Hubstangen und das Querteil bewegenden Exzenter-Kurbeltrieb.

Der Hub-Zeit-Verlauf solcher Pressen folgt bei dem üblichen gleichmäßigen Drehantrieb an sich einer, durch die Schrägstellungen der Pleuel des Exzenter-Kurbeltriebes leicht abgewandelten, Sinuskurve. Von dieser Kurbeltriebfunktion entstehen jedoch Abweichungen durch die elastische Dehnung der Stangen und der Pleuel wie auch elastische Verformungen anderer Teile. Bewegungen in Lagerspielen usw. lassen sich durch Vorspannung ausscheiden.
Die Betreiber der Pressen gehen bei der Planung der Anwendungen und der Konstruktion der Presswerkzeuge von der Kurbeltriebfunktion aus und berücksichtigen ggf. den Fehler in der Weise, dass sie den Oberstempel um die vorher gemessene Dehnungslänge tiefer stellen.

Der Erfindung liegt die Aufgabe zugrunde, einen möglichst genauen Ausgleich der elastischen Dehnung der Presse zu ermöglichen.

Gemäß der Erfindung ist zu diesem Zweck bei einer Presse der eingangs genannten Art vorgesehen, dass das Querteil einen die elastische Dehnung der Presse beim Presshub mindestens teilweise ausgleichenden Stelltrieb für den Oberstempel aufweist.

Der Stelltrieb für die Ausgleichsbewegung des Oberstempels braucht in der Regel nur im Bereich bis zu 3 mm zu arbeiten und kann zeitnah zu der Hubbewegung der Presse gesteuert werden. Es kann im wesentlichen die genaue, unverfälschte Kurbeltriebfunktion eingestellt werden. Es ist aber auch eine ggf. gewünschte Änderung der Kurbeltriebfunktion durch Überkompensation oder Unterkompensation der Dehnung, auch stellenweise, möglich, z.B. eine Verbreiterung der Kurve am Extrempunkt oder eine zeitliche Verschiebung des Extrempunktes.

Vorzugsweise ist der Stelltrieb ausgehend von der jeweiligen tatsächlichen Dehnung der Presse gesteuert.
Der Ausgleich ist dann im Gegensatz zu dem erwähnten Stand der Technik genau der tatsächlichen Dehnung angepasst, die infolge von Schwankungen der Befüllung des Werkzeugs schwankt. Die Maßhaltigkeit der Formlinge wird dadurch besser.

Darüber hinaus ist der Ausgleich schon in jedem Zeitpunkt während des Presshubs vorhanden, während er bei der festen Tieferstellung des Oberstempels nach dem Stand der Technik, richtige Füllmenge vorausgesetzt, erst am Ende erreicht wird und vorher auf dem gesamten Hubweg eine Überkompensation vorliegt. Diese Überkompensation stört bei unterteilten Unterstempelebenen das kalkulierte Zusammenspiel des Oberstempels oder der Oberstempel mit den Unterstempeln und die vorgesehenen Relativbewegungen der Stempel in der Matrize. Es besteht die Gefahr der Haarrissbildung in dem Formling. Mit dem vorgesehenen Ausgleich sind dagegen die Bewegungen des entstehenden Formlings fehlerfrei kalkulierbar.
Insoweit könnte eine wesentliche Verbesserung auch schon mit einem festen Steuerprogramm für den Stelltrieb erzielt werden, das die Dehnung, wenn auch nicht individuell genau, fortschreitend während des Presshubs ausgleicht.

Nach einer besonders vorteilhaften Weiterbildung der Erfindung ist der Stelltrieb von einem in der Achse der Oberstempelhalterung angeordneten Kraftmesser in Verbindung mit der in einer Steuereinheit gespeicherten Kraft-Dehnungs-Funktion mindestens der Hubstangen, vorzugsweise der Presse im Ganzen, gesteuert, so dass ein Regelkreis gebildet ist.

Diese indirekte Erfassung der Dehnung ist besonders einfach, genau und problemlos und erfordert keinen Mehraufwand, da man normalerweise ohnehin in den Oberstempel eine Kraftmessdose o.ä. einbaut.
Bei der Herstellung der Presse braucht nur einmal die elastische Dehnung der, insoweit fertiggestellten, Presse bei einer, vorzugsweise hohen, Presskraft gemessen zu werden und die daraus sich ergebende Kraft-Dehnungs-Funktion in der Steuereinheit gespeichert zu werden.
Eine andere Möglichkeit bestünde darin, die Dehnung mittels eines inkrementierten oder absoluten Lineals o. dgl. festzustellen. Unmittelbar könnte das Lineal den Hub an dem Querteil oder der Traverse verfolgen und an die Steuereinheit übermitteln, in die durch einen Winkelkodierer auch die Stellung der Exzenterwelle ständig eingegeben wird, so dass der theoretische Hub verfügbar ist und der gemessene Wert mit ihm verglichen werden kann.

Nach einer weiteren vorteilhaften Ausgestaltung der Erfindung ist der Stelltrieb ein hydraulischer.
Auch in dieser Beziehung bedeutet die Verwirklichung der Erfindung oftmals keinen Mehraufwand: Der Kolbenzylinder kann zugleich zur Grundeinstellung des Oberstempels in Bezug auf das Presswerkzeug dienen, und zu diesem Zweck ist ein Kolbenzylinder vielfach ohnehin vorgesehen.
Zum Zweck der Erfindung erhält der Kolbenzylinder dann nur ein anderes Ventil für seine Beschickung mit der Druckflüssigkeit, zweckmäßigerweise ein Servoventil.

Es wäre aber auch denkbar, die nach der Erfindung vorgesehene Verstellung motorisch durchzuführen mittels eines Schrittmotors, Servomotors, Hydraulikmotors o.a..

Die Zeichnungen geben ein Ausführungsbeispiel der Erfindung wieder.
- Fig. 1: zeigt eine Presse zur Herstellung von Formlingen aus einem pulverförmigen Werkstoff teils in Seitenansicht, teils in senkrechtem Schnitt,
- Fig. 2: zeigt schematisch die Steuerung eines Teils der Presse und
- Fig. 3: zeigt ein Weg(Hub)-Zeit(Drehwinkel)-Diagramm.

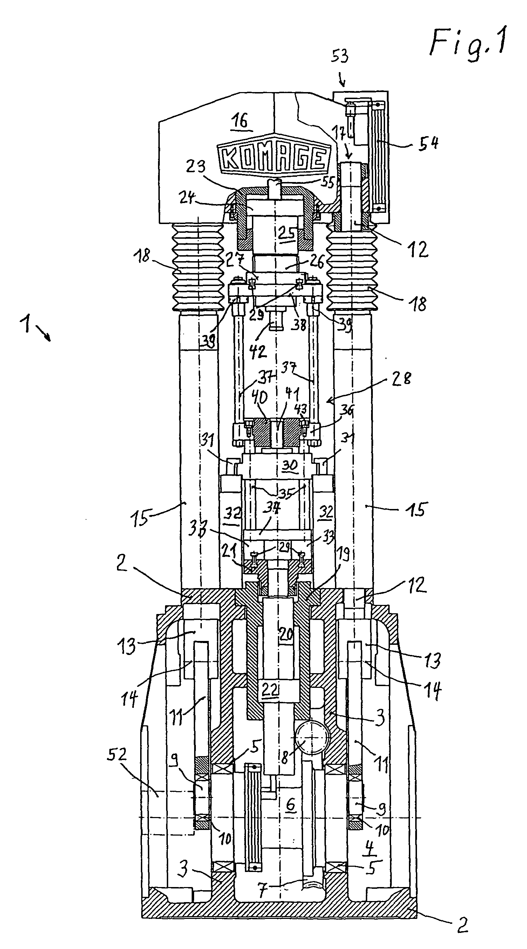

Eine Presse 1 weist als Basisteil ein Gussgehäuse 2 auf, das an drei Seiten weitgehend offen ist. Der Schnitt gemäß Fig. 1 ist durch zwei Zwischenwände 3 des Gussgehäuses 2 geführt; eine Rückwand 4 erscheint in Ansicht.

In den Zwischenwänden 3 ist in Lagern 5 eine Exzenterwelle 6 drehbar gelagert. Sie ist mit einem Schneckenrad 7 versehen. In das Schneckenrad 7 greift eine Antriebsschnecke 8, die durch die Rückwand 4 hindurch aus dem Gussgehäuse 2 herausführt und an der Rückseite des Gussgehäuses 2 mit einem Schwungrad versehen und durch einen Elektromotor angetrieben ist.

Zwei exzentrische Achsstutzen 9 an den Enden der Exzenterwelle 6 sind durch in Lagern 10 auf ihnen angeordnete Pleuel 11 mit vier Hubstangen 12 verbunden; sie sind in kurzen Querbalken 13 U-förmigen Querschnitts, von denen aus sich je zwei Hubstangen 12 nach oben erstrecken, bei 14 angelenkt.
Die Hubstangen 12 sind in starr auf dem Gussgehäuse 2 befestigten Wangen 15 geführt, die jeweils zwei entsprechende Bohrungen aufweisen. An ihren oberen Enden sind sie durch ein Querteil 16 verbunden. Die jeweilige Verbindung mit dem, wiederum als ein Gussgehäuse ausgeführten, Querteil 16 ist bei 17 dargestellt.

Auf ihren aus den Wangen 15 herausragenden oberen Abschnitten sind die Hubstangen 12 von Faltenbälgen 18 umschlossen.

Zur Verschiebung eines Werkzeugteils ist in das Gussgehäuse 2 eine Zylindereinheit 19 mit einem Kolben 22 eingesetzt. An dessen Kolbenstange 20 ist zug- und druckfest eine Traverse 21 für die Anbringung eines Adapters angebracht. Die Ausdehnung der Traverse 21 ist senkrecht zur Zeichenebene größer als in dem Schnitt.
Gegenläufig dazu ist in dem Querteil 16 eine Zylindereinheit 23 mit einem Kolben 24 für die Grundeinstellung eines Oberstempels und den Dehnungsausgleich der Presse angeordnet. Die Kolbenstange 25 des Kolbens 24 trägt unter Zwischenanordnung einer Kraftmessdose 26 ebenfalls eine Traverse 27 für die Anbringung des Adaptors.

Mittels des, mit 28 bezeichneten, Adaptors ist das Presswerkzeug in die Presse eingesetzt.

Der Adaptor 28 ist an den Traversen 21 und 27 jeweils durch in Nuten entsprechenden Querschnitts greifende H-Schienen 29 befestigt und im übrigen mit einer unbewegt bleibenden Unterstempelplatte 30 an dem festen Pressengestell angebracht. Die Unterstempelplatte 30 ist mit Hilfe von Klammern 31 auf zwei neben den Wangen 15 auf dem Gussgehäuse 2 angebrachten Böcken 32 aus Vollmaterial befestigt.

Unmittelbar mit der unteren Traverse 21 verbunden ist über zwei Balken 33 eine Brücke 34, auf der vier die Unterstempelplatte 30 in entsprechenden Bohrungen längsverschieblich durchsetzende Stangen 35 angebracht sind, die eine Matrizenhalterung 36 tragen. Von der Matrizenhalterung 36 erstrecken sich wiederum vier Führungsstangen 37 nach oben, die eine Oberstempelplatte 38 in entsprechenden Gleitlagern 39 längsverschieblich durchsetzen.
Die bereits erwähnte Verbindung des Adaptors mit der oberen Traverse 27 ist an der Oberstempelplatte 38 vorgenommen.
Das Presswerkzeug besteht im vorliegenden Falle aus einer Matrize 40, einem von unten in die Matrize 40 ragenden Unterstempel 41 und einem von oben in die Matrize 40 eindringenden Oberstempel 42.

Die Matrize 40 hat einen Sitz in der Matrizenhalterung 36 und ist an dieser durch einen Kranz von Schrauben 43 befestigt.
Der Unterstempel 41 ist auf der Unterstempelplatte 30 und somit unbeweglich angeordnet.
Der Oberstempel 42 sitzt an der Oberstempelplatte 38.

Der Formling wird in der Matrize 40 aus der in die diese eingefüllten pulverförmigen Masse zwischen dem feststehenden Unterstempel 41 und dem durch den Exzentertrieb 6 bis 11 über die Querbalken 13, die Hubstangen 12, das Querteil 16 und die Einrichtungen 23 bis 27 bewegten Oberstempel 42 gepresst. Die Oberstempelplatte 38 bewegt sich dabei auf den Führungsstangen 37 nach unten.
Bei der Pressung kann durch ein leichtes Absenken der Matrize 40 mittels der Zylindereinheit 19 auch der Unterstempel 41 relativ zu der Matrize 40 bewegt werden.

Durch vollständiges Absenken der Matrize 40 gegenüber dem Unterstempel 41 wird der fertige Formling ausgestoßen.

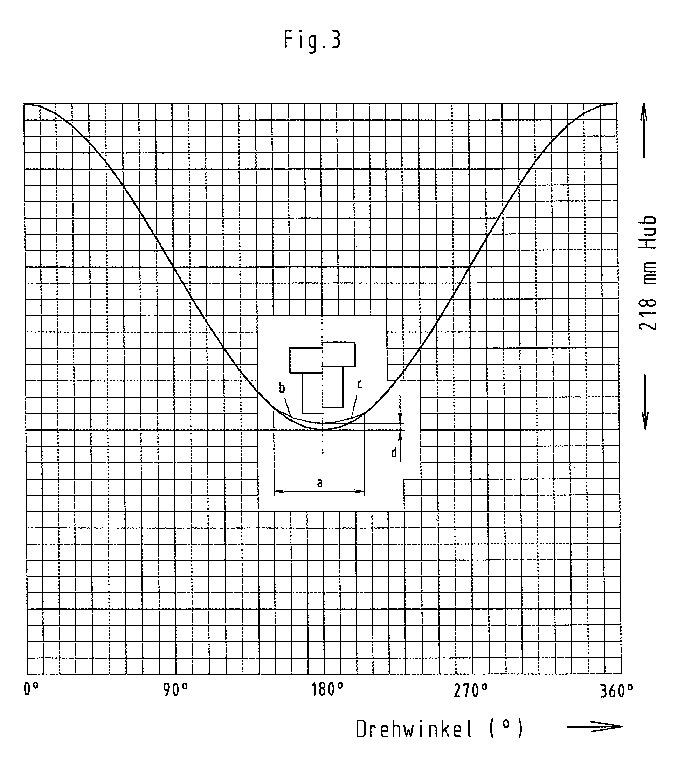

Der Weg-Zeit-Verlauf des Oberstempels beim Hub ist in Fig. 3 als Hub-Drehwinkel-Diagramm dargestellt. (Die Drehung ist im vorliegenden Beispiel gleichmäßig.)

Auf den beiden Kurvenästen bis etwa 150° und ab etwa 205° stimmen der theoretische Hubweg und der tatsächliche Hubweg überein. In dem Bereich a dazwischen unterscheiden sich der theoretische und der tatsächliche Kurvenverlauf. Der Kurvenabschnitt b stellt den theoretischen Verlauf dar, der Kurvenabschnitt c den, wenn keine Maßnahmen dagegen getroffen werden, tatsächlichen Verlauf. Die Differenz d am Extrempunkt beträgt in dem Beispiel 1 mm.
Die Differenz in der Stellung des Oberkolbens ist darüber verdeutlicht.

Die Differenz kommt zustande hauptsächlich durch elastische Dehnung der Hubstangen 12, in geringem Maße aber ferner durch Dehnung und Biegung der Querbalken 13, Dehnung der Pleuel 11 und andererseits Pressung der Lager 5 und 10, ganz geringfügig auch Stauchung der Zwischenwände 3 und der Böcke 32 sowie Biegung der Unterstempelplatte 30 und Stauchung des Unterstempels, schließlich Stauchung des Oberstempels und der auf dessen Achse liegenden weiteren Teile.

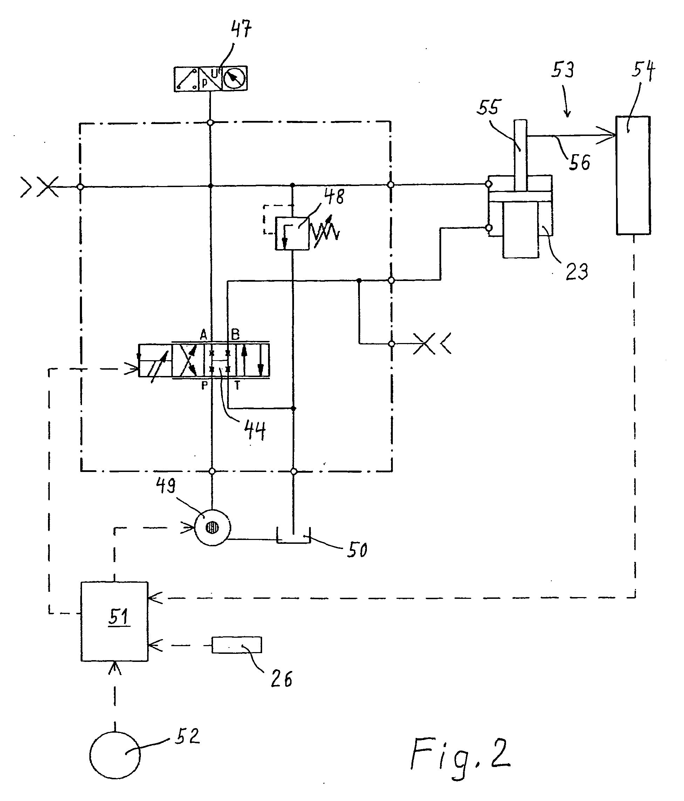

Die Differenz d wird erfindungsgemäß ausgeglichen durch die in Fig. 2 dargestellte hydraulische Steuerung der Zylindereinheit 23 und elektrische Steuerung der Ventile der hydraulischen Steuerung.

Aus der hydraulischen Steuerung seien nur ausdrücklich die Steuerungsorgane erwähnt: Hauptsteuerventil 44, elektrischer Überdruckschalter 47, zusätzliches mechanisches Überdruckventil 48 und im übrigen Pumpe 49 und Tank 50. P und T bedeuten wie üblich Pumpenanschluss bzw. Tankanschluss (= Rücklaufanschluss), A und B Verbraucheranschlüsse, d.h. Anschlüsse der beiden Zylinderkammern. Im übrigen ist der Aufbau durch die üblichen Symbole verdeutlicht. Die Funktion ergibt sich daraus.

Die elektrische Steuerung besteht aus einer zentralen Steuereinheit 51, der Kraftmessdose 26, einem Winkelkodierer 52, der in dem Gussgehäuse 2 neben der Exzenterwelle 6 angeordnet ist und deren Stellung erfasst, sowie einer Wegmesseinrichtung 53 für den Kolben 24. Die Wegmesseinrichtung 53 besteht aus einem inkrementierten oder absoluten Lineal 54, auf das ein an einer zweiten Kolbenstange 55 des Kolbens 24 angebrachter, bei 56 angedeuteter Stellungsanzeiger wirkt. Statt des Lineals 54 käme auch ein von der Kolbenstange 55 über eine Zahnstange betätigter Winkelcodierer in Betracht.
Weitere vorhandene Steuerverbindungen sind nicht dargestellt, wie die Steuerung der Zylindereinheit 19 in Abhängigkeit von der Winkelstellung der Exzenterwelle.

Der Dehnungsausgleich vollzieht sich wie folgt:

Bei der Inbetriebnahme der Presse ist einmal die Dehnung der Presse zwischen der Traverse 27 und der Oberseite des Gussgehäuses 2 oder der Böcke 32 bei Maximalkraft gemessen worden. Die daraus sich ergebende Kraft-Dehnungs-Funktion ist in der Steuereinheit 51 gespeichert worden.

Im Betrieb der Presse wird die von der Kraftmessdose 26 festgestellte Presskraft in die Steuereinheit 51 übermittelt und dort mit der gespeicherten Kraft-Dehnungs-Funktion verglichen. Entsprechend der daraus sich ergebenden Dehnung wird nahezu zeitgleich durch Betätigung des Hauptsteuerventils 44 der Kolben 24 um das Ausmaß der Dehnung vorgeschoben. Der Vorschub wird von der Wegmesseinrichtung 53 erfasst und in der Steuereinheit 51 zur Betätigung des Hauptsteuerventils 44 verarbeitet.

Beim Rückhub wird durch umgekehrte Betätigung des Hauptsteuerventils 44 der Kolben 24 rückgestellt.
Der Kurvenverlauf c in Fig. 3 wird nahezu in den theoretischen Kurvenverlauf b verändert.
Nicht berücksichtigt sind Verformungen im Werkzeug. Auch diese könnte man aber durch eine entsprechende Dehnungsmessung einbeziehen.

Bei dem Beispiel einer Hundert-t-Presse mit Durchmesser 250 x 30 mm des Kolbens 24 und einer maximalen Dehnung von 1 mm wird als das Hauptsteuerventil 44 beispielsweise ein Servoventil, ggf. auch nur ein Proportionalventil, mit einer Durchflussmenge von 40 I/min eingesetzt. Die Zykluszeit der elektrischen Steuerung beträgt beispielsweise 0,5 ms, die Reaktionszeit des Servoventils 12,0 ms.
Für 1 mm Dehnungsausgleich werden somit 0,0725 sec benötigt. Bei einer Anwendung mit einem Gesamtpressbereich von 55°, d.h. 27,5° baut sich die Dehnung in einer Zeit von 0,229 sec auf.
Der sofort einsetzende Ausgleich erfolgt damit um so viel schneller als der Aufbau der Dehnung, dass sich nur eine ganz geringfügige Verzögerung ergibt.

Der Pumpendruck beträgt im vorliegenden Beispiel 220 bar.

## Patentansprüche

1. Presse für die Herstellung von Formlingen aus pulverförmiger Masse
mit einer Oberstempelhalterung (25-27), die an einem durch Hubstangen (12) gehaltenen Querteil (16) angeordnet ist, und einem den Oberstempel (42) über die Hubstangen (12) und das Querteil (16) bewegenden Exzenter-Kurbeltrieb (6-11),
**dadurch gekennzeichnet,**
**dass** das Querteil (16) einen die elastische Dehnung der Presse beim Presshub mindestens teilweise ausgleichenden Stelltrieb (23-27) für den Oberstempel (42) aufweist.

2. Presse nach Anspruch 1,
**dadurch gekennzeichnet,**
**dass** der Stelltrieb (23-27) ausgehend von der jeweiligen tatsächlichen Dehnung der Presse gesteuert ist.

3. Presse nach Anspruch 2,
**dadurch gekennzeichnet,**
**dass** der Stelltrieb (23-27) von einem in der Achse der Oberstempelhalterung (25-27) angeordneten Kraftmesser (26) in Verbindung mit der in einer Steuereinheit (51) gespeicherten Kraft-Dehnungs-Funktion mindestens der Hubstangen (12), vorzugsweise der Presse im Ganzen, gesteuert ist.

4. Presse nach einem der Ansprüche 1 bis 3,
**dadurch gekennzeichnet,**
**dass** der Stelltrieb (23-27) ein hydraulischer ist.

5. Presse nach Anspruch 4,
**dadurch gekennzeichnet,**
**dass** die Beschickung des Hydraulikantriebs (23) mit der Druckflüssigkeit durch ein Servoventil (44) gesteuert ist.

6. Presse nach einem der Ansprüche 1 bis 5,
**dadurch gekennzeichnet,**
**dass** der Stelltrieb (23-27) zugleich zur Grundeinstellung des Oberstempels (42) in Bezug auf das Presswerkzeug (40-42) dient.

7. Verfahren zum Herstellen einer Presse nach einem der Ansprüche 3 bis 6,
**dadurch gekennzeichnet,**
**dass** die elastische Dehnung der, insoweit, fertiggestellten, Presse bei einer, vorzugsweise hohen, Presskraft gemessen wird und die daraus sich ergebende Kraft-Dehnungs-Funktion in der Steuereinheit gespeichert wird.
